# EUROPÄISCHE PATENTSCHRIFT

(11) **EP 1 930 619 B1**
(45) Veröffentlichungstag und Bekanntmachung des Hinweises auf die Patenterteilung: **11.01.2017**
(21) Anmeldenummer: 07018034.4
(22) Anmeldetag: 14.09.2007
(51) Int. Cl.: F16D 69/02, C04B 35/83, C04B 35/573, C04B 35/634, C04B 35/626, C04B 37/00, C04B 35/80

(54) **Frikionsbelastbare Scheiben aus faserverstärkter Keramik**
Friction-resistant discs made of fibre reinforced ceramic
Disques pouvant être soumis à la friction en céramique renforcée par des fibres

(30) Priorität: 08.12.2006 DE 102006057939
(43) Veröffentlichungstag der Anmeldung: 11.06.2008
(73) Patentinhaber: AUDI AG, 85045 Ingolstadt (DE)
(72) Erfinder: KIENZLE, Andreas, 86753 Balgheim (DE); KRÄTSCHMER, Ingrid, 86485 Biberbach (DE)
(74) Vertreter: Asch, Konrad

(56) Entgegenhaltungen:
- EP-A- 1 386 896
- EP-A- 1 640 633
- EP-A- 1 645 671
- DE-A1- 19 711 831

## Beschreibung

Die Erfindung betrifft die Verwendung von polymergebundenen Fasergelegen für friktionsbelastbare Scheiben, insbesondere Bremsscheiben und Kupplungsscheiben, aus faserverstärkter Keramik, gemäß dem Oberbegriff des Patentanspruch 1.

Bremsscheiben aus faserverstärkter Keramik in Gestalt einer an einer Nabe befestigten Kreisringscheibe werden meist aus mehreren Schichten aufgebaut, wobei die äußeren Schichten, die in Kontakt mit den Bremsklötzen kommen, bezüglich ihrer tribologischen Eigenschaften zu optimieren sind, während der inneren Schicht oder den inneren Schichten im wesentlichen mechanische Funktionen (Übertragung des Bremsmoments auf die Achse) und thermische Funktionen (Wärmeabführung) zukommen. Dieselben tribologischen und mechanischen Funktionen sind von einer Kupplungsscheibe zu erfüllen. Entsprechend werden die Materialien für diese Aufgaben optimiert.

In der Offenlegungsschrift DE 100 48 012 A1 werden Carbon-Keramik-Bremsscheiben beschrieben, die Reibschichten aufweisen, die Carbonfasern in Form von Bündeln mit Längen von 0,25 mm bis 8 mm enthalten, wobei die Bündelbreiten der Carbonfaser-Bündel zwischen 0,001 mm und 1,5 mm liegen. Aus der DE 101 18 921 A1 beispielsweise sind Carbon-Keramik-Bremsscheiben bekannt, die eine mindestens dreischichtige Struktur aufweisen, wobei die beiden äußeren Schichten als Reibschichten mit den Bremsklötzen wechselwirken und so die tribologische Funktion realisieren, und mindestens eine innere Schicht radiale oder evolventenförmig gebogene Rippen aufweist, die durch als Kanäle gestaltete Hohlräume voneinander getrennt sind, wobei Luft durch diese Kanäle strömt und zur Wärmeabfuhr beiträgt, wobei die innere Schicht aus faserverstärktem Keramikmaterial besteht, das zur mechanischen Stabilität beiträgt.

Entsprechend diesen unterschiedlichen Funktionen werden für die Reibschicht (tribologische Funktion) und für den Tragkörper (mechanische Funktion) faserverstärkte keramische Materialien verwendet, die sich in Art und Menge der Verstärkungsfasern unterscheiden. Zur mechanischen Stabilität tragen Langfasern mit Längen von mehr als 6 mm im besonderen Maße bei, während für Reibschichten bevorzugt Kurzfasern mit Längen von weniger als 6 mm eingesetzt werden. Der Fasergehalt in den Reibschichten ist üblicherweise geringer als der in den mechanisch beanspruchten Tragkörperen.

Gemäß der Lehre der DE 100 48 012 A1 werden für die Reibschicht Faserfraktionen mit Längen im Bereich von 0,25 mm bis 8 mm eingesetzt, für die Tragkörperen dagegen Faserfraktionen mit Längen im Bereich von 4 mm bis 20 mm. Diese Fraktionen werden aus gemahlenen Faserbündeln gewonnen, wobei diese Faserbündel hier aus gebündelten Endlosfasern (Faserkabel) durch Imprägnieren mit Harzen oder Pechen als Bindemittel, Carbonisieren der Bindemittel sowie gegebenenfalls wiederholtes erneutes Imprägnieren und Carbonisieren hergestellt werden. Als Folge des Mahlschritts unterliegen sowohl die Faserbündellänge als auch die Dicke der Faserbündel statistischen Schwankungen, die zu ungleichmäßigen Materialeigenschaften insbesondere bezüglich deren tribologischer Eigenschaften führen, wobei die Schwankungen in den Materialeigenschaften beispielsweise bei der Weiterverarbeitung noch verstärkt werden können.

Es besteht daher die Aufgabe, die tribologischen Eigenschaften von Reibschichten aus faserverstärkter Keramik dadurch zu verbessern, dass Faserbündelfraktionen mit möglichst homogenen oder eng verteilten Bündellängen und Bündelbreiten eingesetzt werden. Ebenso ist es wünschenswert, die mechanischen Eigenschaften der Tragkörper weiter zu verbessern.

Aus der Europäischen Patentanmeldung EP 1 645 671 A1 sind polymergebundene Fasergelege bekannt, die eine mittlere Länge gemessen in Faserrichtung von 3 mm bis 50 mm und eine mittlere Bündeldicke gemessen senkrecht zur Faserrichtung von 0,1 mm bis 10 mm haben, und bei denen mindestens 75 % aller Fasergelege eine Länge aufweisen, die mindestens 90 % und nicht mehr als 110 % der mittleren Länge beträgt.

Es wurde gefunden, dass sich solche polymergebundenen Fasergelege vorteilhaft zur Herstellung von Carbon-Keramik-Bremsscheiben verwenden lassen, sowohl bei der Herstellung der Reibschichten als auch der Tragkörper für Carbon-Keramik-Bremsscheiben. Ebenso lassen sich die genannten polymergebundenen Fasergelege vorteilhaft zur Herstellung von Kupplungsscheiben aus mit Fasern aus Kohlenstoff verstärkter Keramik (Carbon-Keramik- Kupplungsscheiben) verwenden.

Die Erfindung betrifft daher die Verwendung von polymergebundenen Fasergelegen enthaltend Fasern aus Kohlenstoff, wobei die polymergebundenen Fasergelege eine mittlere Länge gemessen in Faserrichtung von 2 mm bis 80 mm und eine mittlere Bündeldicke gemessen senkrecht zur Faserrichtung von 0,1 mm bis 15 mm haben, und bei denen mindestens 75 % aller polymergebundenen Fasergelege eine Länge aufweisen, die mindestens 90 % und nicht mehr als 110 % der mittleren Länge beträgt, bei der Herstellung von Carbon-Keramik-Bremsscheiben und Carbon-Keramik-Kupplungsscheiben, wobei Mischungen aus den polymergebundenen Fasergelegen und carbonisierbaren Bindemitteln hergestellt werden, diese Mischungen bei erhöhter Temperatur von 80 °C bis 250 °C in Pressformen zu Formkörpern gepresst werden, die erhaltenen Formkörper unter Ausschluss von oxydierenden Agenzien bei einer Temperatur von ca. 750 °C bis ca. 1200 °C zu porösen, mit Fasern aus Kohlenstoff verstärkten Kohlenstoff-Körpern carbonisiert werden, und die erhaltenen porösen Kohlenstoff-Körper schließlich durch Reaktion mit flüssigem Silicium zu mit Fasern aus Kohlenstoff verstärkten Siliciumcarbid-Keramik-Körpern umgewandelt werden, dadurch gekennzeichnet, dass die Mischungen aus den polymergebundenen Fasergelegen und carbonisierbaren Bindemitteln zusätzlich einen Massenanteil von 10% bis 40% an Silicium-Pulver enthalten.. Es ist gemäß der vorliegenden Erfindung auch möglich, Mischungen zweier oder mehrerer Fasergelege mit unterschiedlichen Längen und/oder Breiten zu verwenden.

Die Erfindung betrifft weiter die Verwendung der oben beschriebenen polymergebundenen Fasergelege zur Herstellung von Reibschichten für Carbon-Keramik-Bremsscheiben und Carbon-Keramik-Kupplungsscheiben, wobei die Länge der Fasergelege (parallel zur Faserrichtung) bevorzugt 2 mm bis 6 mm beträgt, und die Breite der Fasergelege (größte Ausdehnung senkrecht zur Faserrichtung) bevorzugt 0,1 mm bis 1,5 mm beträgt.

Weiter betrifft die Erfindung die Verwendung der oben beschriebenen polymergebundenen Fasergelege zur Herstellung von Tragkörpern für Carbon-Keramik-Bremsscheiben und Carbon-Keramik-Kupplungsscheiben, wobei die Länge der Fasergelege (parallel zur Faserrichtung) bevorzugt 3 mm bis 60 mm beträgt, und die Breite der Fasergelege (größte Ausdehnung senkrecht zur Faserrichtung) bevorzugt 1 mm bis 15 mm beträgt, und wobei bevorzugt das Verhältnis der Länge zur Breite der Faserbündel von 3 : 1 bis 10 : 1 beträgt.

Zur Herstellung der polymergebundenen Fasergelege werden Kohlenstoff-Multifilamentstränge durch ein Harzbad (Lösung oder niederviskose Schmelze eines wärmehärtenden Harzes oder eines thermoplastischen Polymeren) gezogen und auf einer Bandpresse zu Faserbändern verdichtet, die bevorzugt eine Dicke von 100 µm bis 200 µm aufweisen. Das mit Harz getränkte Faserband wird beim Durchlaufen der Bandpresse unter Erwärmen gleichzeitig ausgehärtet und dadurch verfestigt (im Fall von wärmehärtenden Harzen) oder durch Abkühlen auf eine Temperatur unterhalb der Schmelztemperatur des thermoplastischen Polymeren verfestigt. Im nächsten Schritt werden die Faserbänder durch einen Stanz- oder Schneidprozess auf eine definierte Länge und definierte Breite geschnitten. Die Breite der Faserbündel liegt für die erfindungsgemäß vorgesehene Verwendung in Reibschichten von Carbon-Keramik-Bremsscheiben und Carbon-Keramik-Kupplungsscheiben bevorzugt in einem Bereich von 0,1 mm bis 1,5 mm, ihre Länge von 2 mm bis 6 mm. Zur Verwendung in Tragkörpern werden dagegen Fasergelege bevorzugt, deren Länge (parallel zur Faserrichtung) 3 mm bis 60 mm beträgt, und deren Breite (größte Ausdehnung senkrecht zur Faserrichtung) 1 mm bis 15 mm beträgt.

Diese Faserbündel werden zur weiteren Verarbeitung mit einem wärmehärtenden Harz und gegebenenfalls Siliciumpulver in einem Intensivmischer vermischt. Als weitere Zusätze können Graphit, Siliciumcarbid und Kokse, allesamt in Form von feinteiligen Pulvern mit Teilchengrößen im Bereich von bevorzugt 5 µm bis 500 µm, insbesondere von 10 µm bis zu 250 µm, eingesetzt werden. Der Massenanteil dieser weiteren Zusätze beträgt jeweils bevorzugt 1 % bis 10 %, insgesamt jedoch bevorzugt nicht mehr als 15 %. Die Pressmasse kann beispielsweise durch Zugabe von einer wässrigen Lösung von Polyvinylalkohol zu einem Granulat abgebunden werden, welches nach Trocknung der Granulatkörner für eine automatisierbare Befüllung geeignet ist. Alternativ kann das trockene Gemisch auch durch Zugabe von Glykol, einem Öl oder einem flüssigen Wachs so abgebunden werden, dass es staubfrei verarbeitet werden kann.

Zur Herstellung eines Vorkörpers für eine Reibschicht kann diese Mischung (nachfolgend als "Reibschichtmischung" bezeichnet) in eine zylindrische Pressform gefüllt werden und zu einem zylindrischen Ring von beispielsweise 2 mm Dicke durch Anwenden von Temperatur und Druck einer hydraulischen Presse verpresst werden. Dieser zylindrische Ring kann nun direkt auf einen vorbereiteten zylindrischen Tragkörperring, auf den eine Klebeschicht beispielsweise aus einem Phenolharz und Silicium-Pulver mit einem Zahnspachtel in gleichmäßiger Dicke aufgetragen wurde, aufgeklebt werden. Die Verklebung zu einer Verbundscheibe erfolgt dabei durch Anwendung von Druck und Temperatur, wobei die Klebeschicht aushärtet und Tragkörper und Reibschicht-Vorkörper miteinander verbindet.

Es ist erfindungsgemäß möglich, den wie oben hergestellten Vorkörper für die Reibschicht und den separat hergestellten Tragkörperring jeweils in dem sogenannten "CFK"-Zustand, also in Form eines thermisch gehärteten und auf Raumtemperatur abgekühlten faserverstärkten Polymerkörpers, zu verkleben. Eine andere Möglichkeit ist, den Vorkörper für die Reibschicht und den Tragkörperring jeweils für sich aus dem CFK-Zustand durch Carbonisieren, nämlich Erhitzen unter Ausschluss von oxydierenden Agenzien auf Temperaturen von ca. 750 °C bis ca. 1300 °C, bevorzugt von ca. 900 °C bis 1200 °C zu sogenannten "CFC-Körpern" (mit Fasern aus Kohlenstoff verstärkter poröser Kohlenstoff) umzuwandeln, und erst in diesem Zustand miteinander zu einer Verbundscheibe zu verkleben.

Die nach einem dieser Verfahren hergestellte Verbundscheibe bestehend aus Tragkörperring und mindestens einem auf einer Deckfläche des Tragkörperrings aufgeklebten Vorkörper für die Reibschicht wird nach (erneutem) Carbonisieren durch Behandeln mit flüssigem Silicium zu einem Siliciumcarbid enthaltenden Körper umgewandelt, wobei mindestens ein Teil des beim Carbonisieren aus dem Harz oder Polymer entstandenen Kohlenstoff mit dem Silicium zu Siliciumcarbid reagiert. Dazu wird in bevorzugter Weise die carbonisierte Verbundscheibe in einen Tiegel aus Graphit gelegt und mit Silicium-Teilchen überschüttet oder auf Dochte gestellt, die in einem Tiegel gefüllt mit Si-Granulat stehen. Die Infiltration der carbonisierten Verbundscheibe mit flüssigem Silicium erfolgt nach dem Aufheizen auf eine Temperatur oberhalb der Schmelztemperatur von Silicium (1420 °C) unter vermindertem Druck oder im Vakuum. Die erhaltenen silicierten Scheiben weisen nach der Endbearbeitung eine rissfreie Oberfläche im Bereich der Deckflächen der Reibschichten auf.

Die so erhaltenen Bremsscheiben zeigen im Bremsprüfstandstest ein gleichmäßiges Reibverhalten in allen Bereichen des verwendeten "AK Master" Testprogramms. Im sogenannten Fadingtest (Reibwert in Abhängigkeit von der Betriebstemperatur) zeigen die Scheiben ein Reibwertverhalten mit hohem konstantem Reibwertverlauf (Reibungskoeffizient µ von 0,4 bis 0,45). Die Stabilität der Reibschicht hängt dabei gemäß den im Zusammenhang mit der Erfindung durchgeführten Untersuchungen von der Menge des zugesetzten Silicium-Pulvers in der Reibschichtmischung ab.

Beträgt der Massenanteil an Silicium-Pulver in der Reibschichtmischung 5 %, so ergibt sich bereits bei 40 Fadingzyklen eine deutliche Aufrauhung der Oberfläche mit Zunahme des Belagsverschleißes. Bei einem Massenanteil von 10 % Silicium in der Mischung beobachtet man erst bei ca. 80 Zyklen einer gleichartige Aufrauhung. Dieser günstige Effekt des Zusatzes von Silicium-Pulver ist bis zu Massenanteilen von ca. 50 % in der Reibschichtmischung zu beobachten. Als besonders günstig hat sich ein Massenanteil von Silicium in der Reibschichtmischung von 10 % bis 40 % erwiesen.

Die Erfindung wird durch die nachstehenden Beispiele weiter erläutert. Dabei bedeuten Angaben in "%" jeweils den Massenanteil des betreffenden Stoffs in einer Mischung, soweit nicht ausdrücklich anders gesagt.

### Beispiel 1: Herstellung der Faserbündel

Kohlenstoff-Multifilamentstränge mit jeweils ca. 50 000 Filamenten wurden durch ein Harzbad (Phenolharz "®Norsophen PF N 1203", Cray Valley) gezogen und auf einer Bandpresse zu Faserbändern mit einer Dicke von ca. 200 µm verdichtet. Durch Erwärmen auf ca. 180 °C wurde das mit Harz getränkte Faserband beim Durchlaufen der Bandpresse gleichzeitig ausgehärtet. Die gehärteten Faserbänder wurden anschließend durch einen Stanzprozess auf eine definierte Länge von 6,0 mm und eine Breite von 1,0 mm geschnitten.

### Beispiel 2: Herstellung der Reibschichtmischung

50 g Silicium-Granulat (®Silgrain der Fa Elkem, Körnung bis zu 70 □m) wurden mit 350 g eines trockenen Phenolharzpulvers (®Bakelite 223) und 650 g der Faserbündel aus Beispiel 1 (1 mm Breite, 6 mm Länge und 0,2 mm Dicke) in einem Intensivmischer der Firma Eirich bei einer Wirblerdrehzahl von 300 min⁻¹ vorgemischt. Zur Granulierung wurden der Mischung bei einer Drehzahl von 1200 min⁻¹ insgesamt 300 g einer wässrigen Lösung von Polyvinylalkohol (®Mowiol 4-88, Massenanteil des Polyvinylalkohols in der Lösung ca. 5 %, Viskosität einer 4 %-igen Lösung in Wasser bei 20 °C: 4 mPa□s, Hydrolysegrad ca. 88 cmol/mol, Hersteller Kuraray Specialties Europe GmbH) über einen Zeitraum von 5 min zugegeben. Das erhaltene Granulat wurde anschließend auf eine Restfeuchtigkeit von ca. 2,5 % getrocknet.

### Beispiel 3: Herstellung des Vorkörpers für die Reibschicht:

350 g des getrockneten Granulats aus Beispiel 2 wurden in eine zylindrische Pressform mit dem Außendurchmesser von 350 mm und einem Innenzylinder-Durchmesser von 180 mm gleichmäßig eingefüllt und bei einem Druck von 1,7 MPa und einer Temperatur von 150 °C 10 Minuten lang bis zum Aushärten des Harzes verpresst. Nach dem Aushärten wurde eine 3 mm dicke zylindrische Scheibe mit einem Außendurchmesser von 350 mm und einem Innendurchmesser von 180 mm erhalten.

### Beispiel 4: Herstellung des Vorkörpers für den Tragkörper

Es wurde eine Mischung aus 15 kg von gehärteten Faserbändern mit den Abmessungen 50 mm × 15 mm, und 5 kg solche Faserbänder mit den Abmessungen 5 mm × 1,5 mm, hergestellt analog zu dem in Beispiel 1 beschriebenen Verfahren, und 10,3 kg eines Novolakharzes (®Norsophen PF N 1203) in einen Intensivmischer wie in Beispiel 2 vorgelegt, und nach Zugabe von 6 kg der in Beispiel 2 beschriebenen wässrigen Polyvinylalkohol-Lösung bei einer Drehzahl von 1600 min⁻¹ ca. fünf Minuten lang granuliert. Das erhaltene Granulat wurde auf eine Restfeuchte von ca. 2 % getrocknet. Aus diesem Granulat wurde ein zylinderringförmiger Tragkörper mit einer Dicke von 50 mm, einem inneren Umfang von 180 mm und einem äußeren Umfang von 350 mm während 30 Minuten bei 150 °C und einem Druck von 1,5 MPa gepresst und dabei ausgehärtet.

### Beispiel 5: Verkleben von carbonisierten Reibschichten mit einem Tragkörper

Zwei gemäß Beispiel 2 hergestellte Reibschicht-Vorkörper wurden in einen Ofen überführt und mit einer Aufheizrate von 2 K/min unter einer Schutzgasatmosphäre auf eine Temperatur von 900 °C erhitzt, wobei die organischen Bestandteile in amorphen Kohlenstoff umgewandelt wurden. Nach Abkühlen und Entnahme aus dem Ofen wurden diese Scheiben anschließend auf einen gemäß Beispiel 4 hergestellten und in gleicher Weise wie oben beschrieben carbonisierten Tragkörper auf jeweils einer Deckfläche aufgeklebt; als Klebstoff wurde ein Phenolharz eingesetzt, dem ein Massenanteil von 30 % eines feinteiligen (mittlerer Teilchendurchmesser ca. 100 □m) Silicium-Pulvers zugesetzt wurde. Zum Aushärten des Klebers wurden diese zusammengesetzten Scheiben auf einer Presse bei einer Temperatur von 140 °C und einem Druck von 1 MPa verpresst.

### Beispiel 6: Silicieren der zusammengesetzten Scheibe

Die zusammengesetzte Scheibe (ca. 2,2 kg) aus Beispiel 5 wurde in einen Graphittiegel auf drei poröse Kohlenstoffdochte gelegt, mit 2800 g Silicium-Granulat (®Silgrain der Firma Elkem, Körnung bis zu 2 mm) überschüttet und unter Vakuum (Druck ca. 5 hPa = 5 mbar) auf eine Temperatur von 1700 °C erhitzt, wobei die Aufheizraten von Raumtemperatur bis 1420 °C 5 K/min und von 1420 °C bis 1700 °C 2 K/min betrugen. Ab 1420 °C schmolz das Silicium und wurde über offene Porenkanäle in das Bauteil über Kapillarkräfte eingesaugt, wo es mit Kohlenstoff zu Siliciumcarbid reagierte. Nach Abkühlen und Entnahme aus dem Ofen wurde das gebildete C/SiC-Bauteil zur Endbearbeitung an den Funktionsflächen (den Deckflächen des Zylinderringes) überschliffen.

## Patentansprüche

1. Verwendung von polymergebundenen Fasergelegen enthaltend Fasern aus Kohlenstoff, wobei die polymergebundenen Fasergelege eine mittlere Länge gemessen in Faserrichtung von 3 mm bis 50 mm und eine mittlere Bündeldicke gemessen senkrecht zur Faserrichtung von 0,1 mm bis 10 mm haben, und bei denen mindestens 75 % aller polymergebundenen Fasergelege eine Länge aufweisen, die mindestens 90 % und nicht mehr als 110 % der mittleren Länge beträgt, bei der Herstellung von Carbon-Keramik-Bremsscheiben und Carbon-Keramik -Kupplungsscheiben, wobei Mischungen aus den polymergebundenen Fasergelegen und carbonisierbaren Bindemitteln hergestellt werden, diese Mischungen bei erhöhter Temperatur von 80 °C bis 250 °C in Pressformen zu Formkörpern gepresst werden, die erhaltenen Formkörper unter Ausschluss von oxydierenden Agenzien bei einer Temperatur von ca. 750 °C bis ca. 1200 °C zu porösen, mit Fasern aus Kohlenstoff verstärkten Kohlenstoff-Körpern carbonisiert werden, und die erhaltenen porösen Kohlenstoff-Körper schließlich durch Reaktion mit flüssigem Silicium zu mit Fasern aus Kohlenstoff verstärkten Siliciumcarbid-Keramik-Körpern umgewandelt werden, **dadurch gekennzeichnet, dass** die Mischungen aus den polymergebundenen Fasergelegen und carbonisierbaren Bindemitteln zusätzlich einen Massenanteil von 10% bis 40% an Silicium-Pulver enthalten.

2. Verwendung gemäß Anspruch 1, wobei eine Mischung aus polymergebundenen Fasergelegen mit Längen von 2 mm bis 6 mm und Breiten von 0,1 mm bis 1,5 mm und carbonisierbaren Bindemitteln hergestellt wird, und diese Mischung bei erhöhter Temperatur von 80 °C bis 250 °C in Pressformen zu einem zylinderringförmigen Formkörper gepresst wird.

3. Verwendung gemäß Anspruch 2, wobei der zylinderringförmige Formkörper nach dem Pressen unter Ausschluss von oxydierenden Agenzien bei einer Temperatur von ca. 750 °C bis ca. 1200 °C zu einem porösen, mit Fasern aus Kohlenstoff verstärkten Kohlenstoff-Körper carbonisiert wird.

4. Verwendung gemäß Anspruch 1, wobei eine Mischung aus polymergebundenen Fasergelegen mit Längen von 3 mm bis 60 mm und Breiten von 1 mm bis 15 mm, wobei bevorzugt das Verhältnis der Länge zur Breite der Faserbündel von 3 : 1 bis 10 : 1 beträgt, und carbonisierbaren Bindemitteln hergestellt wird, und diese Mischung bei erhöhter Temperatur von 80 °C bis 250 °C in Pressformen zu einem zylinderringförmigen Formkörper gepresst wird.

5. Verwendung gemäß Anspruch 4, wobei der zylinderringförmige Formkörper nach dem Pressen unter Ausschluss von oxydierenden Agenzien bei einer Temperatur von ca. 750 °C bis ca. 1200 °C zu einem porösen, mit Fasern aus Kohlenstoff verstärkten Kohlenstoff-Körper carbonisiert wird.

6. Verwendung gemäß Anspruch 1, wobei ein zylinderringförmiger Körper gemäß Anspruch 4, dessen beide Deckflächen mit je einem zylinderringförmigen Körper gemäß Anspruch 3 bedeckt sind, wobei die Körper in bevorzugter Weise durch Kleben fixiert sind, unter Ausschluss von oxydierenden Agenzien bei einer Temperatur von ca. 750 °C bis ca. 1200 °C zu einem mehrschichtigen porösen, mit Fasern aus Kohlenstoff verstärkten Kohlenstoff-Körper carbonisiert wird, und der erhaltene poröse Kohlenstoff-Körper schließlich durch Reaktion mit flüssigem Silicium zu mit Fasern aus Kohlenstoff verstärkten Siliciumcarbid-Keramik-Körpern umgewandelt wird.

7. Verwendung gemäß Anspruch 1, wobei ein zylinderringförmiger Körper gemäß Anspruch 5, dessen beide Deckflächen mit je einem zylinderringförmigen Körper gemäß Anspruch 4 bedeckt sind, wobei die Körper in bevorzugter Weise durch Kleben fixiert sind, durch Reaktion mit flüssigem Silicium zu einem mit Fasern aus Kohlenstoff verstärkten Siliciumcarbid-Keramik-Körper umgewandelt wird.

8. Verwendung gemäß Anspruch 1, **dadurch gekennzeichnet, dass** die Mischungen zusätzlich einen Massenanteil von 1 % bis 10 % mindestens eines Zusatzes ausgewählt aus Graphit, Siliciumcarbid und Koks, jeweils in Pulverform, enthalten.

## Claims

1. Use of polymer-bound fibre mats containing carbon fibres, wherein the polymer-bound fibre mats have a mean length measured in the fibre direction of 3 mm to 50 mm and a mean bundle thickness measured perpendicular to the fibre direction of 0.1 mm to 10 mm, and in which at least 75% of all polymer-bound fibre mats have a length that is at least 90% and not more than 110% of the mean length, in the production of carbon-ceramic brake discs and carbon-ceramic clutch discs, wherein mixtures of the polymer-bound fibre mats and carbonisable binders are prepared, these mixtures are pressed at an elevated temperature of 80°C to 250°C in moulds into moulded articles, the obtained moulded articles are carbonised under the exclusion of oxidising agents at a temperature of approx. 750°C to approx. 1200°C into porous carbon materials reinforced with carbon fibres, and the obtained porous carbon materials are finally converted by reaction with liquid silicon to silicon carbide-ceramic articles reinforced with carbon fibres, **characterised in that** the mixtures of the polymer-bound fibre mats and carbonisable binders additionally contain a mass fraction of 10% to 40% of silicon powder.

2. Use according to claim 1, wherein a mixture of polymer-bound fibre mats with lengths from 2 mm to 6 mm and widths from 0.1 mm to 1.5 mm and carbonisable binders is prepared, and this mixture is pressed at an elevated temperature of 80°C to 250°C in moulds to form a cylindrical moulded article.

3. Use according to claim 2, wherein the cylindrical moulded article after pressing is carbonised with the exclusion of oxidising agents at a temperature of approx. 750°C to approx. 1200°C to a porous carbon material reinforced with carbon fibres.

4. Use according to claim 1, wherein a mixture of polymer-bound fibre mats with lengths from 3 mm to 60 mm and widths from 1 mm to 15 mm, wherein preferably the ratio of the length to the width of the fibre bundles is from 3 : 1 to 10 : 1, and carbonisable binders is prepared, and this mixture is pressed at an elevated temperature of 80°C to 250°C in moulds to form a cylindrical moulded article.

5. Use according to claim 4, wherein the cylindrical moulded article after pressing is carbonised with the exclusion of oxidising agents at a temperature of approx. 750°C to approx. 1200°C to a porous carbon material reinforced with carbon fibres.

6. Use according to claim 1, wherein a cylindrical article according to claim 4, both of the covering surfaces of which are covered with a cylindrical article according to claim 3, wherein the articles are preferably fixed by gluing, is carbonised with the exclusion of oxidising agents at a temperature of approx. 750°C to approx. 1200°C to form a multilayer porous carbon material reinforced with carbon fibres, and the obtained porous carbon material is finally converted by reaction with liquid silicon to silicon carbide-ceramic articles reinforced with carbon fibres.

7. Use according to claim 1, wherein a cylindrical article according to claim 5, both of the covering surfaces of which are covered with a cylindrical-article according to claim 4, wherein the articles are preferably fixed by gluing, are converted by reaction with liquid silicon to a silicon carbide-ceramic article reinforced with carbon fibres.

8. Use according to claim 1, **characterised in that** the mixtures additionally contain a mass fraction of 1% to 10% of at least one additive selected from graphite, silicon carbide and coke, in each case in powder form.

## Revendications

1. Utilisation de nappes de fibres liées à des polymères contenant des fibres de carbone, dans laquelle les nappes de fibres liées à des polymères ont une longueur moyenne mesurée dans le sens des fibres de 3 mm à 50 mm et une épaisseur de faisceau moyenne mesurée perpendiculairement au sens des fibres de 0,1 mm à 10 mm, et parmi lesquelles au moins 75 % de toutes les nappes de fibres liées à des polymères présentent une longueur d'au moins 90 % et qui n'est pas supérieure à 110 % de la longueur moyenne, lors de la fabrication de disques de frein en carbone - céramique et de disques d'embrayage en carbone - céramique, dans laquelle des mélanges composés de nappes de fibres liées à des polymères et d'agents liants pouvant être carbonisés sont fabriqués, ces mélanges sont compressés à une température élevée de 80 °C à 250 °C dans des moules sous pression pour former des corps moulés, les corps moulés obtenus sont carbonisés sous exclusion d'agents oxydants à une température d'environ 750 °C à environ 1200 °C pour obtenir des corps en carbone poreux renforcés de fibres de carbone, et les corps en carbone poreux obtenus sont enfin transformés par réaction avec du silicium liquide en corps de céramique - carbure de silicium renforcés de fibres de carbone, **caractérisée en ce que** les mélanges composés de nappes de fibres liées à des polymères et d'agents liants pouvant être carbonisés contiennent en plus une proportion en poids de 10 % à 40 % de poudre de silicium.

2. Utilisation selon la revendication 1, dans laquelle un mélange composé de nappes de fibres liées à des polymères ayant des longueurs de 2 mm à 6 mm et des largeurs de 0,1 mm à 1,5 mm et d'agents liants pouvant être carbonisés est fabriqué, et ce mélange est compressé à une température élevée de 80 °C à 250 °C dans des moules sous pression pour former un corps moulé en forme d'anneau cylindrique.

3. Utilisation selon la revendication 2, dans laquelle le corps moulé en forme d'anneau cylindrique est carbonisé après la compression sous exclusion d'agents oxydants à une température d'environ 750 °C à environ 1200 °C pour donner un corps en carbone poreux renforcé de fibres de carbone.

4. Utilisation selon la revendication 1, dans laquelle un mélange composé de nappes de fibres liées à des polymères ayant des longueurs de 3 mm à 60 mm et des largeurs de 1 mm à 15 mm, dans laquelle le rapport de la longueur sur la largeur du faisceau de fibres est situé de préférence de 3:1 à 10:1, et d'agents liants pouvant être carbonisés est fabriqué, et ce mélange est compressé à une température élevée de 80 °C à 250 °C dans des moules sous pression pour former un corps moulé en forme d'anneau cylindrique.

5. Utilisation selon la revendication 4, dans laquelle le corps moulé en forme d'anneau cylindrique est carbonisé après la compression sous exclusion d'agents oxydants à une température d'environ 750 °C à environ 1 200 °C pour donner un corps en carbone poreux renforcé de fibres de carbone.

6. Utilisation selon la revendication 1, dans laquelle un corps en forme d'anneau cylindrique selon la revendication 4, dont les deux surfaces de recouvrement sont recouvertes respectivement d'un corps en forme d'anneau cylindrique selon la revendication 3, dans laquelle les corps sont fixés de préférence par collage, est carbonisé sous exclusion d'agents oxydants à une température d'environ 750 °C à environ 1 200 °C pour donner un corps en carbone poreux multicouche renforcé de fibres de carbone et le corps en carbone poreux obtenu est enfin transformé par réaction avec du silicium liquide en corps de céramique - carbure de silicium renforcé de fibres de carbone.

7. Utilisation selon la revendication 1, dans laquelle un corps en forme d'anneau u cylindrique selon la revendication 5, dont les deux surfaces de recouvrement sont recouvertes respectivement d'un corps en forme d'anneau cylindrique selon la revendication 4, dans laquelle les corps sont fixés de préférence par collage, est transformé par réaction avec du silicium liquide en un corps de céramique - carbure de silicium renforcé de fibres de carbone.

8. Utilisation selon la revendication 1, **caractérisée en ce que** les mélanges contiennent en plus une proportion en poids de 1 % à 10 % d'au moins un additif choisi parmi le graphite, le carbure de silicium et le coke, respectivement sous forme de poudre.
